# EUROPEAN PATENT SPECIFICATION

(11) **EP 2 042 428 B1**
(45) Date of publication and mention of the grant of the patent: **21.11.2012**
(21) Application number: 08250853.2
(22) Date of filing: 13.03.2008
(51) Int. Cl.: B64D 13/08

(54) **Cabin air system for aviation electronics**
Kabinenluftsystem für Flugzeugelektronik
Système d'air de cabine pour électroniques d'aviation

(30) Priority: 27.09.2007 US 904377
(43) Date of publication of application: 01.04.2009
(73) Proprietor: Hamilton Sundstrand Corporation, Windsor Locks, CT 06096-1010 (US)
(72) Inventor: Boucher, Eric T., Westfield, MA 01085 (US); Powell, Thomas E., Canton, CT 06019-3719 (US)
(74) Representative: Tomlinson, Kerry John

(56) References cited:
- EP-A1- 1 279 594
- WO-A1-03/086859
- US-A- 4 966 005
- US-A- 5 327 744
- US-A1- 2006 059 942
- US-B1- 6 817 575

## Description

### BACKGROUND

This invention relates generally to electronic systems for aviation, and in particular to thermal cycling of aviation electronics during flight operations. Specifically, the invention is directed toward a cabin air system that reduces stress on aviation electronics by limiting the range of thermal cycling.

When located outside pressurized, temperature-controlled areas, aviation electronics are subject to typical ambient temperature extremes ranging from -55 °C or lower (lower than -70 °F) at cruising altitude to +40°C or higher (+100 °F or higher) during ground operations. The resulting thermal stress is a significant design consideration, which limits service life and, because the thermal cycling range often requires military-specification (MIL-SPEC) rated parts, precludes the use of more advanced design techniques.

Essentially, the problem arises because electronic components do not all have the same characteristic coefficient of thermal expansion. In particular, circuit boards typically expand and contract at different rates than the resistors, capacitors, chips, and integrated circuit components mounted to them. This causes mechanical stress, and raises the possibility of solder joint cracking or other temperature-related failures.

Modem, high-density designs, as available in commercial off-the-shelf (COTS) components, typically employ surface mount technology such as ball grid array-type (BGA) packaging. This offers significant advantages in cost and efficiency, but these COTS systems do not have the same flexibility as older MIL-SPEC designs such as dual-in-line pin-and-socket grids with longer, more compliant leads. As a result, while aviation electronics applications grow in complexity and sophistication, many still require MIL-SPEC rated parts that employ increasingly dated design techniques. There is thus a need to limit the thermal cycling range, reducing stress on aviation electronics and accommodating a wider range of modem electronic components.

US 6,817,575 B1 discloses an environmental control system for an aircraft which uses bleed air from a propulsion engine to drive an air turbine which is used as an air source for cooling the cabin and avionics aboard the aircraft. Re-circulated air from the cabin may be mixed with the cooled air prior to distribution to the cabin and avionics. Similar systems are disclosed in US 4,966,005, EP 1279594 A1, WO 03/086859 A1 and US 2006/059942 A1.US 5,327,744 discloses a system for cooling in series the cockpit and mission equipment package bays of a helicopter.

### SUMMARY

According to a first aspect, the present invention provides a cabin air system for aviation electronics, the system comprising: a main cabin area; a fuel vapor zone; an aviation electronics module; a compressor for compressing ambient air; an air conditioner for cooling the compressed ambient air from the compressor to produce cabin air; and a manifold for delivering the cabin air to the aviation electronics module, characterised in that the aviation electronics module is located in the fuel vapor zone outside the main cabin area and in that the cabin air creates a positive pressure differential within the electronics module, with respect to the fuel vapor zone.

According to a second aspect, the present invention provides a method for circulating cabin air to reduce an aviation electronics thermal cycling range, the method comprising: compressing ambient air; cooling the compressed ambient air for circulation through a cabin area; mixing the cooled, compressed ambient air with recirculating cabin air from the cabin area; and providing the mixture of the cooled compressed ambient air and the recirculating cabin air to an aviation electronics module, characterised in that the electronics module is located in a fuel vapor zone located outside the cabin area, and in that a positive overpressure is regulated within the electronics module with respect to the fuel vapor zone.

Thus there is disclosed herein a cabin air system for aviation electronics that includes a compressor, an air conditioner, and a mix manifold. The compressor compresses ambient air from an air inlet such as a ram air inlet or an auxiliary power unit (APU) inlet. In a preferred embodiment the air conditioner cools some of the compressed ambient air, generating cool air at a desired cool air pressure. Some of the compressed air bypasses the air conditioner, creating hot bypass or add heat air. The mix manifold efficiently regulates a desired cabin air temperature by mixing the cool air with hot bypass air, and with recirculated cabin air. The mix manifold delivers most of the mixed air to the cabin, and delivers some of the mixed air to an electronics module.

### BRIEF DESCRIPTION OF THE DRAWINGS

FIG. 1 is a top schematic view of an aircraft with a cabin air system for aviation electronics.
FIG. 2 is a schematic diagram of the cabin air system in FIG. 1.
FIG. 3 is a perspective view of an aviation electronics module utilizing cabin air to reduce its thermal cycling range.

### DETAILED DESCRIPTION

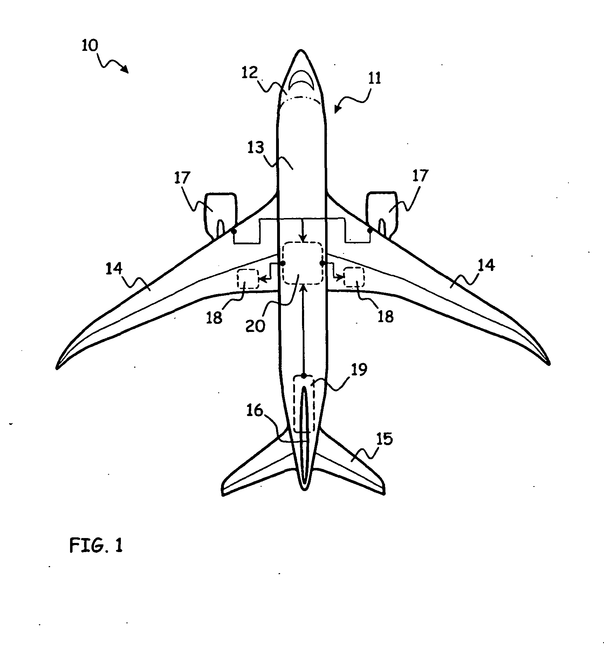

FIG. 1 is a top schematic view of aircraft 10 with cabin air system 20 configured to deliver cabin air to aviation electronics modules 18. Aircraft 10 comprises fuselage 11 with cockpit area 12 and main cabin area 13, wings 14, horizontal stabilizer 15, vertical stabilizer 16 and main engines 17. Aviation electronics modules 18, auxiliary power unit (APU) 19 and cabin air system 20 are shown with hidden lines.

Fuselage 11 is typically an elongated, aerodynamic structure with a cylindrical or oval cross section, comprising cockpit 12, cabin 13 and a cargo hold (not shown). Fuselage 11 also provides structural support for wings 14, horizontal and vertical stabilizers 15, 16, and main engines 17.

In exemplary embodiments, wings 14 are airfoils configured to generate lift, horizontal stabilizer (tailplane) 15 provides pitch control, vertical stabilizer (tail) 16 provides yaw control, and main engines 17 provide thrust. In these embodiments, main engines 17 typically comprise high-bypass turbofans, low-bypass turbofans, turbojets, or, alternatively, turboprop or reciprocating engines coupled to propellers. The number of main engines is variously one, two (as shown in FIG. 1) or more, in wing-mounted, fuselage-mounted, or stabilizer-mounted configurations. In alternative embodiments, wings 14 are rotary airfoils and aircraft 10 is a rotary-wing aircraft such as a helicopter. In these embodiments, stabilizers 15, 16 exhibit corresponding alternative configurations including, but not limited to, tail rotor configurations.

Electronics modules 18 are representative of a number of aviation electronics systems, positioned variously throughout aircraft 10. Electronics modules 18 include, but are not limited to, air conditioner pack controller units (PCUs); electric motor controllers for landing gear, flight control surfaces and other aviation systems; electronic pump controllers for fuel, hydraulic, pneumatic and environmental systems; and controllers for main engine, auxiliary, and electrical power systems.

In a preferred embodiment, auxiliary power unit (APU) 19 comprises a gas turbine engine with an integrated compressor. Alternatively, APU 19 is operable to power a standalone compressor, and variously comprises a gas turbine engine, a piston-driven engine, or another form of internal combustion engine.

APU 19 is configured to meet aviation power needs during ground operations, when main engines 17 are not running. The APU provides power for electrical and instrumentation systems, hydraulic systems, main engine startup and other accessory systems, and supplies pressurized air to cabin air system 20. In some embodiments, APU 19 is configured for in-flight functionality, either as a standalone source of accessory power, independent of the main engines, or as an emergency backup in the event of main engine failure.

Typically, both main engines 17 and APU 19 are configured to supply compressed air via a bleed air system. The bleed air system employs a series of valves to direct compressed air from any or all of APU 19 and low-, medium-, or high-pressure compressor spools of main engines 17, depending upon operating conditions. Alternatively, APU 19 comprises a standalone compressor that supplies compressed air to cabin air system 20 independently of the bleed air system. The standalone compressor is configurable to be powered either by APU 19, main engines 17, or both.

Cabin air system 20 is part of the environmental control system (ECS). Cabin air system 20 controls the temperature, pressure, humidity, ozone level, particulate content, and other environmental parameters of compressed air from main engines 17, auxiliary power unit (APU) 19, or another standalone compressor. System 20 provides cabin air for circulation within cockpit 12, cabin 13, and, in some embodiments, additional areas such as a cargo area, typically via a cargo bay heating system.

In contrast to the prior art, cabin air system 20 is also configured to deliver cabin air to aviation electronics modules 18. This reduces stress and fatigue by limiting the range of environmental conditions to which electronics modules 18 are subject during normal flight cycles, particularly the thermal cycling range. In some embodiments, cabin air system 20 allows for the use of compact, energy-efficient electronics components, which cannot withstand a large number of cycles over the full thermal cycling range of prior art designs.

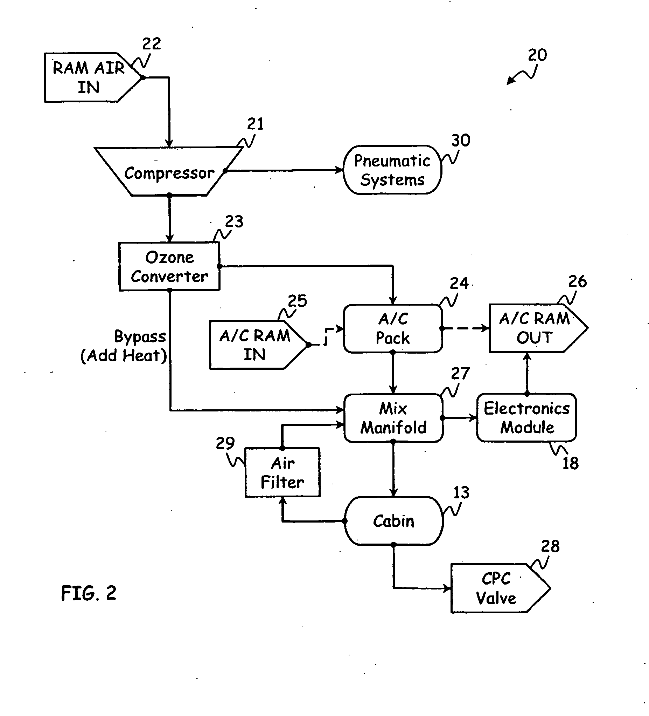

FIG. 2 is a schematic illustration of cabin air system 20, configured to deliver cabin air to aviation electronics modules 18. Cabin air system 20 comprises compressor 21 with ram air inlet 22, ozone converter 23, A/C pack 24, mix manifold 27 and air filter 29.

Compressor 21 is representative of one or more compressors configured to compress ambient (outside) air from ram inlet 22 for cabin air system 20. In some embodiments, compressor 21 is an axial compressor comprised within one or more of main engines 17, or a radial compressor comprised within APU 19, as described above with respect to FIG. 1. In these embodiments, ram air inlet 22 is an engine inlet or an APU inlet, respectively, and compressor 21 typically supplies compressed air via a bleed air system. In alternative embodiments, compressor 21 is a standalone cabin air compressor, or a number of such compressors, powered by APU 19 or main engines 17, or driven by an electric motor. In these embodiments, compressor 21 typically supplies the compressed air via an independent cabin air system that is isolated from the bleed air system.

In typical embodiments, compressor 21 also provides compressed air to pneumatic systems 30. Pneumatics systems 30 vary from embodiment to embodiment, and include, but are not limited to, air starter motors, anti-icing systems, cargo hold heating systems, smoke detection systems, flap or other control surface systems, and pneumatically powered pumps for the hydraulic system.

Ozone converter 23 typically comprises a noble metal catalyst such as palladium for converting ozone to oxygen. In this embodiment, ozone converter 23 usually operates on compressed air from compressor 21, and delivers reduced-ozone compressed air to air conditioner (A/C) pack 24.

A/C pack 24 comprises a refrigeration system for reducing the temperature and pressure of the compressed air, producing cool air at the desired cool air pressure (see below) for mix manifold 27. The refrigeration system typically utilizes an air cycle machine or combined turbine/compressor apparatus, utilizing additional ambient (outside) air as a coolant. Some compressed air bypasses A/C pack 24, creating hot bypass air (or add heat air) for mix manifold 27, below.

In one embodiment, the coolant air flows from A/C ram inlet 25 to A/C pack 24, where it passes over heat exchangers to remove heat from the pressurized air, and exits via A/C ram outlet 26. In this embodiment, an air conditioner pack control unit (PCU) utilizes a series of flow valves and temperature sensors to regulate the pressure and temperature of the cabin air produced by A/C pack 24. In alternative embodiments, and during some ground operations, the air is cooled by an air conditioner utilizing non-aviation specific cooling technology.

Mix manifold 27 typically comprises a number of chambers or manifolds for mixing cool air from A/C pack 24 with hot bypass (add heat) air, and with recirculating (or recirculated) cabin air returning from main cabin 13. The mix manifold utilizes a duct air temperature sensor to control the mix ratio as a function of desired cabin air temperature.

In contrast to the prior art, mix manifold 27 also delivers cabin air to at least one aviation electronics module 18, in order to reduce the thermal cycling range. In some embodiments, manifold 27 delivers unmixed cabin air directly from A/C pack 24. In other embodiments, manifold 27 delivers mixed cabin air after combination with recirculating cabin air, or manifold 27 delivers recirculated cabin air prior to mixing with cool air from A/C pack 24.

Cabin air is typically delivered to electronics module 18 via plastic or metal tubing. In some embodiments, mix manifold 27 utilizes an electronics air system comprising a combination of tubing, ducts, hoses, and valves or similar flow control devices to regulate cabin air flow to a variety of electronics modules 18. In a preferred embodiment, cabin air returns from electronics module 18 to A/C ram outlet 26, where the cabin air is exhausted. Alternatively, cabin air is exhausted from electronics module 18 via either cabin pressure control (CPC) valve 28, described below, or via a dedicated electronics air system outlet.

Electronics modules 18 are located in fuel vapor zones, where fuel may be present in either vapor or liquid form. In these embodiments electronics module 18 is sealable, and system 20 creates a non-fuel vapor zone within, and isolated from, the fuel vapor zone.

In typical configurations of cabin air system 20, A/C pack 24 and mix manifold 27 are located below the floor of main cabin area 13. Mixed cabin air is delivered to cabin 13 via an overhead cabin ventilation system, using a set of riser ducts. Cabin air typically circulates from the top of the cabin toward the floor, and from the front of the cabin toward the rear. Cabin air recirculates back from main cabin 13 to mix manifold 27 through air filter 29. Filter 29 is a typically a particulate filter and preferable a HEPA-type particulate filter, and usually uses a recirculation air fan to establish an overpressure in order to deliver recirculating cabin air to mix manifold 27.

Some cabin air from main cabin area 13 is not recirculated, but is instead exhausted or vented via cabin pressure control (CPC) valve 28. The CPC valve is usually on the lower or ventral side of the fuselage, near the tail cone, but its location can vary. CPC valve 28 controls air pressure in main cabin area 13, and typically a cockpit area, but in some embodiments CPC valve 28 controls pressure in any or all of a main cabin area, a cockpit area, and a cargo hold area.

Each of the elements of cabin air system 20 is illustrative of a range of different embodiments. In particular, elements such as ozone converter 23, A/C pack 24, and air filter 29 are represented as unitary, but typically vary in number. A/C packs 24, for example, typically number one in small aircraft and two in commercial airliners, but in some larger aircraft there are three. Electronics modules 18 also vary; both in number and in configuration, as described above with respect to FIG. 1.

Operating parameters for cabin air system 20 depend upon ambient environmental conditions and on main engine, APU, and compressor operating conditions. Outside air, for example, enters ram air inlet 22 at a wide range of pressures, from approximately 14.7 pounds per square inch (14.7 psi; or approximately 101 kPa) at sea level to lower than 3 psi (lower than 20 kPa) at typical commercial cruising altitude (39,000 feet, or about 12,000 m). The ambient air temperature also varies, from -55 °C or lower at cruising altitude, to 70 °C or higher at ground level.

In typical cruising mode, compressor 21 is a low-pressure compressor spool of a main engine, and compresses the ambient air from ram air inlet 22 to about 30 psi (about 200 kPa), with a temperature of about 200 °C (400 °F). In other configurations, and under other operating conditions, compressor 21 is a different compressor spool of a main engine, an APU compressor, or a standalone compressor, and the pressure and temperature of the compressed air vary.

Ozone converter 23 removes ozone from the compressed air, typically by dissociation on the noble metal catalyst. The ozone converter removes approximately 60% to 95% of the incoming ozone, depending upon design, compressed air temperature, and service life, producing reduced-ozone air for A/C pack 24.

A/C pack 24 cools the air to a temperature of about 60 °F (15 °C), and decompresses it to the desired cool air pressure of about 12 psi (80 kPA; higher at lower altitude). The relative humidity is typically about 5% or lower, but this varies with outside conditions.

Mix manifold 27 mixes air from A/C pack 24 with add heat/bypass air and with recirculating cabin air from air filter 29, varying the ratio to obtain a desired cabin air temperature on the order of 70 °F (on the order of 20 °C). The relative humidity of the mixed air ranges up to about 10-15%. Mix manifold 27 delivers mixed air to main cabin 13 (and the cockpit) at a rate of approximately twenty cubic feet per minute (550 liter/min) or more, per passenger or crew member.

The CPC valve and mix manifold 27 work in concert, such that the cabin air system typically exchanges the entire interior cabin air volume ten or more times per hour. Excess cabin air is vented by cabin pressure control (CPC) valve 28. The CPC valve regulates air pressure according to an engineering limit on cabin overpressure, which in one embodiment is 8.6 psi (60 kPa). At 39,000 feet (12,000 m), for example, the exterior pressure is about 2.9 psi (about 20 kPa) and the interior pressure is about 11.5 psi (about 80 kPa). In other embodiments the engineering limit varies, providing a relatively lower or relatively higher internal air pressure.

Mix manifold 27 provides sufficient cabin air to limit the thermal cycling range of electronics module 18. Typically the cabin air warms the module, limiting cold thermal cycling, but in some embodiments the cabin air also cools the module, limiting warm thermal cycling. The amount of cabin air required varies with module size, location and power consumption, but is typically small with respect to the volume of main cabin 13. This allows cabin air system 20 to deliver cabin air to electronics modules 18 without substantial modification to existing designs for compressor 21, A/C pack 24 and mix manifold 27.

Aviation electronics module 18 is generally located in an unpressurized, unheated region of the aircraft, with typical thermal cycling between -55 °C to +70 °C (that is, a thermal cycling range of 125 °C). In high-altitude arctic flight, however, the ambient air temperature can be lower than -70 °C, and occasionally lower than -80 °C, while maximum ground-level temperatures are higher than +80 °C. The temperature at a given electronics module, moreover, can exceed the metrological range due to sunlight, engine operation and other local heating effects. Thus the extremes of thermal cycling extend lower than -70 °C or lower, minimum, and higher than +80 °C or higher, maximum, for a total range in excess of 150 °C.

Cabin air system 20 delivers sufficient cabin air to limit both the typical thermal cycling range, and the thermal extremes. Specifically, the typical thermal cycling range is limited to less than seventy degrees Celsius (70 °C), and, in a preferred embodiment, to forty-seven degrees Celsius (47 °C). The thermal minimum is limited to temperatures higher than minus twenty degrees Celsius (-20 °C), and, in a preferred embodiment, to temperatures higher than minus ten degrees Celsius (-10 °C). In embodiments where cabin air system 20 provides cooling air, the thermal maximum is limited to temperatures lower than one hundred degrees Celsius (+100 °C), and, in a preferred embodiment, to temperatures lower than fifty degrees Celsius (+50 C).

These limitations reduce the effects of differential expansion, lessening fatigue and lowering the risk of solder joint cracking or other thermal stress-related failure mode. Cabin air system 20 also provides for greater flexibility in electronics design, by accommodating a wider range of both MIL-SPEC and non-MIL SPEC components.

Specifically, the standard MIL-SPEC temperature range is from -55 °C to +125 °C, and the full (or extended) MIL-SPEC temperature range is from -75 °C to +225 °C. In some embodiments, cabin air system 20 limits the thermal minimum to temperatures that are higher than -55 °C, even under conditions of extreme ambient cold, and limits the thermal maximum to temperatures that are lower than +100 °C, even under conditions of extreme ambient heat. This falls within the standard MIL-SPEC range, and does not require extended-range MIL-SPEC components.

In preferred embodiments, moreover, cabin air system 20 limits the thermal cycling range to temperatures higher than -20 °C, which is significantly higher than the standard MIL-SPEC minimum, and to temperatures lower than +50 °C, which is significantly lower than the standard MIL-SPEC maximum. This range conforms to the published temperature ratings of a number of commercial off-the-shelf (COTS) components, providing for a much more flexible approach to aviation electronics design than one that is limited to standard MIL-SPEC (or extended-range MIL-SPEC) parts. In particular, reducing the thermal cycling range provides for the use of some COTS components that could not otherwise withstand repeated thermal cycling.

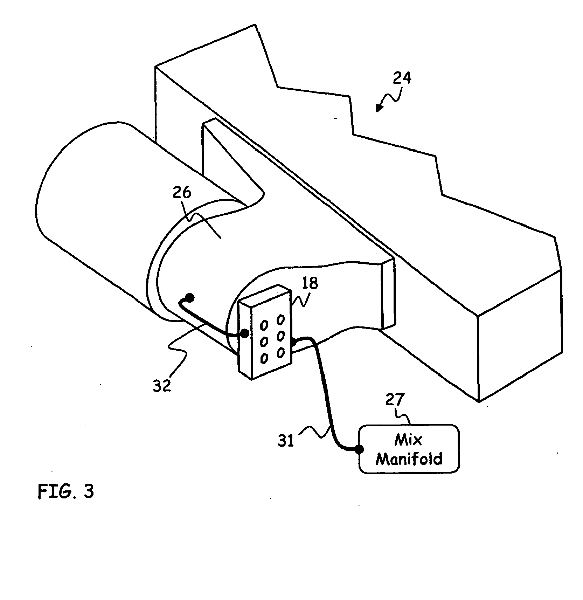

FIG. 3 is a perspective view of aviation electronics module 18, utilizing cabin air to limit the thermal cycling range. In this embodiment, electronics module 18 is an air conditioner pack control unit (PCU), configured to regulate cabin air and ram air flow through A/C pack 24.

As shown in FIG. 3, electronics module 18 is located proximate A/C ram outlet 26. At cruising altitude, the A/C ram outlet is subject to a high rate of ambient air flow at temperatures reaching -55 °C or lower. Cabin air from mix manifold 27 enters module 18 at electronics air inlet 31, and exits to A/C ram outlet 26 via electronics air outlet 32. This raises the thermal minimum experienced by electronics module 18, limiting its thermal cycling range.

The embodiment of FIG. 3 is illustrative of a wide range of potential aviation electronics applications, including, but not limited to, fuel, oil, water, pneumatic, and hydraulic pump control; air pressure, air temperature, airspeed, Mach speed and other environmental measurements; main engine and auxiliary power unit control; and motor control for landing gear retraction and deployment, or for flap, aileron, elevator, rudder and other control surface manipulation.

The amount of cabin air supplied by mix manifold 27 is determined as a function of the ambient temperature extremes, the desired thermal cycling limits, and the effects of localized heat sources. The cabin air reduces thermal fatigue on the components of electronics module 18, and, in some embodiments, limits the thermal cycling range such that it conforms to a standard MIL-SPEC range, rather than an extended MIL-SPEC range. In preferred embodiments, the cabin air limits the thermal cycling range such that it conforms to the temperature ratings of commercial off-the-shelf (COTS) components, rather than MIL-SPEC components. The COTS components include, but are not limited to, 2512-format capacitors, 2512-format thick film chip resistors, and other leadless surface mount component formats. The COTS components are assembled by a variety of techniques including, but not limited to, ball-grid-array (BGA) techniques, ceramic substrate-based BGA (CPGA) techniques, and plastic substrate-based BGA (PBGA) techniques.

Aviation electronics modules 18 are located in fuel vapor zones. In order to reduce the explosion risk in such zones, safety considerations for the prior art require that the electronics modules be "potted" (coated with a thick insulating layer), hermetically sealed, or, alternatively, enclosed in explosion-proof containers.

Cabin air system 20 of FIG. 2, in contrast, creates a non-fuel vapor zone for electronics module 18, where the non-fuel vapor zone is isolated from the fuel vapor zone. Specifically, mix manifold 27 utilizes an electronics air delivery system comprising electronics air inlet 31, electronics air outlet 32 and a number of valves or other flow control devices. The electronics air delivery system regulates a positive overpressure within electronics module 18, creating the non-fuel vapor zone by limiting fuel vapor entry. Alternatively, mix manifold 27 simply delivers sufficient cabin air to electronics module 18 to sweep fuel vapor out via electronics air outlet 32, creating the non-fuel vapor zone by removing fuel vapors. These techniques provide additionally flexibility in reducing the risk of accidental fuel vapor ignition, both during normal flight and in the event of forced landing.

Although the present invention has been described with reference to preferred embodiments, the terminology used is for the purposes of description, not limitation. Workers skilled in the art will recognize that changes may be made in form and detail without departing from the scope of the invention, which is defined by the claims and their equivalents.

## Claims

1. A cabin air system (20) for aviation electronics, the system comprising:
a main cabin area (13);
a fuel vapor zone;
an aviation electronics module (18);
a compressor (21) for compressing ambient air;
an air conditioner (24) for cooling the compressed ambient air from the
compressor to produce cabin air; and
a manifold (27) for delivering the cabin air to the aviation electronics module (18),
**characterised in that** the aviation electronics module (18) is located in the fuel vapor zone outside the main cabin area (13) and **in that** the cabin air creates a positive pressure differential within the electronics module (18), with respect to the fuel vapor zone.

2. The cabin air system of claim 1, wherein the manifold (27) comprises a mix manifold configured to mix the conditioned air from the air conditioner (24) with recirculating cabin air from the cabin area (13).

3. The cabin air system of claim 1 or 2, wherein the aviation electronics module (18) vents the cabin air to a ram air vent (26).

4. The cabin air system of claim 1, 2 or 3, wherein the cabin air limits a thermal cycling range of the aviation electronics module (18) to less than seventy degrees Celsius.

5. The cabin air system of claim 4, wherein the cabin air limits the thermal cycling range to less than fifty degrees Celsius.

6. The cabin air system of any preceding claim, wherein the cabin air limits a thermal cycling range of the aviation electronics module (18) to temperatures higher than minus twenty degrees Celsius.

7. The cabin air system of claim 6, wherein the cabin air limits the thermal cycling range to temperatures lower than fifty degrees Celsius.

8. The cabin air system of any preceding claim, wherein the cabin air limits a thermal cycling range of the aviation electronics module (18) to between -55 °C and +125 °C.

9. The cabin air system of claim 8, wherein the cabin air limits the thermal cycling range to temperatures higher than -35°C.

10. The cabin air system of any preceding claim, wherein the compressor (21) is driven by a gas turbine engine, the gas turbine engine being at least one of a main aircraft engine (17) or an auxiliary power unit (19).

11. The cabin air system of any preceding claim, wherein the manifold (27) creates a non-fuel vapor zone within the fuel vapor zone.

12. The cabin air system of any preceding claim, wherein the thermal cycling range is limited to temperatures higher than minus forty degrees centigrade.

13. A method for circulating cabin air to reduce an aviation electronics thermal cycling range, the method comprising:
compressing ambient air;
cooling the compressed ambient air for circulation through a cabin area (13);
mixing the cooled, compressed ambient air with recirculating cabin air from the cabin area (13); and
providing the mixture of the cooled compressed ambient air and the recirculating cabin air to an aviation electronics module (18),
**characterised in that** the aviation electronics module (18) is located in a fuel vapor zone located outside the cabin area (13), and **in that** a positive overpressure is regulated within the electronics module (18) with respect to the fuel vapor zone.

14. The method of claim 13, wherein providing the recirculating cabin air comprises limiting the thermal cycling range to temperatures higher than minus twenty degrees Celsius.

15. The method of claim 13 or 14, wherein regulating the positive overpressure in the electronics module (18) creates a non-fuel vapor zone within the fuel vapor zone.

## Patentansprüche

1. Kabinenluftsystem (20) für Luftfahrt-Elektronik, wobei das System Folgendes aufweist:
einen Hauptkabinenbereich (13);
eine Treibstoffdampfzone;
ein Flugzeugelektronikmodul (18);
einen Verdichter (21) zum Verdichten von Umgebungsluft;
eine Klimaanlage (24) zum Kühlen der verdichteten Umgebungsluft von dem Verdichter, um Kabinenluft zu erzeugen; und
einen Verteiler (27) zum Zuführen der Kabinenluft zu dem LuftfahrtElektronikmodul (18),
**dadurch gekennzeichnet, dass** sich das Luftfahrt-Elektronikmodul (18) in der Treibstoffdampfzone außerhalb des Hauptkabinenbereichs (13) befindet und dass die Kabinenluft ein Überdruckdifferential in dem Elektronikmodul (18) in Bezug auf die Treibstoffdampfzone erzeugt.

2. Kabinenluftsystem nach Anspruch 1,
wobei der Verteiler (27) einen Mischverteiler aufweist, der zum Mischen der aufbereiteten Luft von der Klimaanlage (24) mit Kabinenumluft von dem Kabinenbereich (13) ausgebildet ist.

3. Kabinenluftsystem nach Anspruch 1 oder 2,
wobei das Luftfahrt-Elektronikmodul (18) die Kabinenluft an eine Stauluft-Freisetzeinrichtung (26) freisetzt.

4. Kabinenluftsystem nach Anspruch 1, 2 oder 3,
wobei die Kabinenluft einen Temperaturwechselbeanspruchungsbereich des Luftfahrt-Elektronikmoduls (18) auf weniger als 70 Grad Celsius begrenzt.

5. Kabinenluftsystem nach Anspruch 4,
wobei die Kabinenluft den Temperaturwechselbeanspruchungsbereich auf weniger als 50 Grad Celsius begrenzt.

6. Kabinenluftsystem nach einem vorhergehenden Ansprüche,
wobei die Kabinenluft einen Temperaturwechselbeanspruchungsbereich des Luftfahrt-Elektronikmoduls (18) auf Temperaturen über minus 20 Grad Celsius begrenzt

7. Kabinenluftsystem nach Anspruch 6,
wobei die Kabinenluft den Temperaturwechselbeanspruchungsbereich auf Temperaturen unter 50 Grad Celsius begrenzt.

8. Kabinenluftsystem nach einem vorhergehenden Ansprüche,
wobei die Kabinenluft einen Temperaturwechselbeanspruchungsbereich des Luftfahrt-Elektronikmoduls (18) auf zwischen -55 ° C und +125 ° C begrenzt.

9. Kabinenluftsystem nach Anspruch 8,
wobei die Kabinenluft den Temperaturwechselbeanspruchungsbereich auf Temperaturen über -35 ° C begrenzt.

10. Kabinenluftsystem nach einem der vorhergehenden Ansprüche,
wobei der Verdichter (21) durch ein Gasturbinentriebwerk betrieben wird, wobei es sich bei dem Gasturbinentriebwerk um mindestens eines von einem Hauptflugzeugtriebwerk (17) und einem Hilfstriebwerk (19) handelt.

11. Kabinenluftsystem nach einem der vorhergehenden Ansprüche,
wobei der Verteiler (27) eine Treibstoffdampf-freie Zone innerhalb der Treibstoffdampfzone erzeugt.

12. Kabinenluftsystem nach einem der vorhergehenden Ansprüche,
wobei der Temperaturwechselbeanspruchungsbereich auf Temperaturen begrenzt ist, die höher als minus 40 Grad Celsius sind.

13. Verfahren zum Zirkulieren von Kabinenluft zur Reduzierung eines Luftfahrt-Elektronik-Temperaturwechselbeanspruchungsbereichs, wobei das Verfahren folgende Schritte aufweist:
Verdichten von Umgebungsluft;
Kühlen der verdichteten Umgebungsluft für die Zirkulation durch einen Kabinenbereich (13);
Mischen der gekühlten, verdichteten Umgebungsluft mit Kabinenumluft von dem Kabinenbereich (13); und
Bereitstellen der Mischung aus der gekühlten, verdichteten Umgebungsluft und der Kabinenumluft an ein Luftfahrt-Elektronikmodul (18),
**dadurch gekennzeichnet, dass** sich das Luftfahrt-Elektronikmodul (18) in einer Treibstoffdampfzone außerhalb des Kabinenbereichs (13) befindet und dass ein positiver Überdruck in dem Elektronikmodul (18) in Bezug auf die Treibstoffdampfzone geregelt wird.

14. Verfahren nach Anspruch 13,
wobei das Bereitstellen der Kabinenumluft das Begrenzen des Temperaturwechselbeanspruchungsbereichs auf Temperaturen über minus 20 Grad Celsius beinhaltet.

15. Verfahren nach Anspruch 13 oder 14,
wobei das Regeln des positiven Überdrucks in dem Elektronikmodul (18) eine Treibstoffdampf-freie Zone in der Treibstoffdampfzone erzeugt.

## Revendications

1. Système (20) d'aération de cabine pour avionique, le système comprenant :
une zone cabine principale (13) ;
une région à vapeurs de carburant ;
un module d'avionique (18) ;
un compresseur (21) servant à comprimer l'air ambiant ;
un conditionneur d'air (24) servant à refroidir l'air ambiant comprimé issu du compresseur pour produire de l'air de cabine ; et
un collecteur (27) servant à fournir l'air de cabine au module d'avionique (18),
**caractérisé en ce que** le module d'avionique (18) est placé dans la région à vapeurs de carburant à l'extérieur de la zone cabine principale (13), et **en ce que** l'air de cabine crée une différence de pression positive au sein du module d'avionique (18) par rapport à la région à vapeurs de carburant.

2. Système d'aération de cabine selon la revendication 1, dans lequel le collecteur (27) comprend un collecteur mélangeur conçu pour mélanger l'air conditionné issu du conditionneur d'air (24) à de l'air de cabine de recirculation issu de la zone cabine (13).

3. Système d'aération de cabine selon la revendication 1 ou 2, dans lequel le module d'avionique (18) évacue l'air de cabine vers une évacuation d'air dynamique (26).

4. Système d'aération de cabine selon la revendication 1, 2 ou 3, dans lequel l'air de cabine limite une plage de cyclage thermique du module d'avionique (18) à moins de soixante-dix degrés Celsius.

5. Système d'aération de cabine selon la revendication 4, dans lequel l'air de cabine limite la plage de cyclage thermique à moins de cinquante degrés Celsius.

6. Système d'aération de cabine selon l'une quelconque des revendications précédentes, dans lequel l'air de cabine limite une plage de cyclage thermique du module d'avionique (18) à des températures supérieures à moins vingt degrés Celsius.

7. Système d'aération de cabine selon la revendication 6, dans lequel l'air de cabine limite la plage de cyclage thermique à des températures inférieures à cinquante degrés Celsius.

8. Système d'aération de cabine selon l'une quelconque des revendications précédentes, dans lequel l'air de cabine limite une plage de cyclage thermique du module d'avionique (18) à entre -55°C et +125°C.

9. Système d'aération de cabine selon la revendication 8, dans lequel l'air de cabine limite la plage de cyclage thermique à des températures supérieures à -35°C.

10. Système d'aération de cabine selon l'une quelconque des revendications précédentes, dans lequel le compresseur (21) est entraîné par une turbomachine, la turbomachine prenant la forme d'un moteur principal d'aéronef (17) et/ou d'un groupe auxiliaire de puissance (19).

11. Système d'aération de cabine selon l'une quelconque des revendications précédentes, dans lequel le collecteur (27) crée une région sans vapeurs de carburant au sein de la région à vapeurs de carburant.

12. Système d'aération de cabine selon l'une quelconque des revendications précédentes, dans lequel la plage de cyclage thermique est limitée à des températures supérieures à moins quarante degrés Celsius.

13. Procédé pour faire circuler de l'air de cabine visant à réduire une plage de cyclage thermique d'avionique, le procédé comprenant les étapes consistant à :
comprimer de l'air ambiant ;
refroidir l'air ambiant comprimé en vue de le faire circuler dans une zone cabine (13) ;
mélanger l'air ambiant comprimé refroidi à de l'air de cabine de recirculation issu de la zone cabine (13) ; et
fournir le mélange de l'air ambiant comprimé refroidi et de l'air de cabine de recirculation à un module d'avionique (18),
le procédé étant **caractérisé en ce que** le module d'avionique (18) est placé dans une région à vapeurs de carburant située à l'extérieur de la zone cabine (13), et **en ce qu'**il comprend l'étape consistant à réguler une surpression positive au sein du module d'avionique (18) par rapport à la région à vapeurs de carburant.

14. Procédé selon la revendication 13, dans lequel l'étape consistant à fournir l'air de cabine de recirculation comprend l'étape consistant à limiter la plage de cyclage thermique à des températures supérieures à moins vingt degrés Celsius.

15. Procédé selon la revendication 13 ou 14, dans lequel l'étape consistant à réguler la surpression positive au sein du module d'avionique (18) crée une région sans vapeurs de carburant au sein de la région à vapeurs de carburant.
